(19) Europäisches Patentamt
European Patent Office
Office européen des brevets

(11) **EP 3 895 883 B1**

(12) **EUROPEAN PATENT SPECIFICATION**

(45) Date of publication and mention
of the grant of the patent:
**27.03.2024 Bulletin 2024/13**

(21) Application number: **19895640.1**

(22) Date of filing: **13.12.2019**

(51) International Patent Classification (IPC):
***B29D 30/30*** *(2006.01)*     ***B60C 9/00*** *(2006.01)*
***B60C 15/06*** *(2006.01)*     ***B29D 30/48*** *(2006.01)*

(52) Cooperative Patent Classification (CPC):
**B29D 30/48; B29D 30/3021; B60C 9/005;**
B29D 2030/486; B60C 2015/061; B60C 2015/0639;
B60C 2015/0642; B60C 2015/065;
B60C 2015/0657; B60C 2015/0685;
B60C 2015/0692

(86) International application number:
**PCT/JP2019/049040**

(87) International publication number:
**WO 2020/122252 (18.06.2020 Gazette 2020/25)**

(54) **PNEUMATIC TIRE**

LUFTREIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.12.2018 JP 2018233922**

(43) Date of publication of application:
**20.10.2021 Bulletin 2021/42**

(73) Proprietor: **BRIDGESTONE CORPORATION**
**Chuo-ku**
**Tokyo 104-8340 (JP)**

(72) Inventors:
• **OHSAWA Yasuo**
**Tokyo 104-8340 (JP)**
• **YOSHIMI Takuya**
**Tokyo 104-8340 (JP)**

(74) Representative: **Marks & Clerk LLP**
**15 Fetter Lane**
**London EC4A 1BW (GB)**

(56) References cited:
**EP-A1- 2 944 483**     **JP-A- 2004 058 807**
**JP-A- 2013 001 206**     **JP-A- 2013 001 206**
**US-A1- 2015 020 945**

**Description**

TECHNICAL FIELD

The present invention relates to a pneumatic tire, and more specifically, to a pneumatic tire that achieves both ride comfort and steering stability at a high level.

BACKGROUND ART

In the structure of pneumatic tires, there is often a conflict between improving ride comfort and improving steering stability, and research and development are being conducted to find a balance between ride comfort and steering stability. There is a pneumatic radial tire in which a reinforcing layer composed of fiber cords or steel cords is arranged around the entire circumference of the tire from a bead portion to a sidewall portion, and the cord angle of the reinforcing layer is almost perpendicular to a carcass cord of a carcass layer (Patent Document 1). Patent Document 1 describes that such a reinforcing layer can increase the circumferential rigidity without changing the vertical rigidity, thereby improving the steering stability or the braking performance without compromising the ride comfort performance. There is a pneumatic radial tire in which a bead reinforcing layer is divided into two layers, inner and outer, and the circumferential ply rigidity of the outer layer near the center of a sidewall is larger than that of the inner layer near a bead core (Patent Document 2).

RELATED ART DOCUMENTS

PATENT DOCUMENTS

[Patent Document 1] JPS62-29403A
[Patent Document 2] JP2004-58807A
[Patent Document 3] JP2013-01206A discloses a pneumatic tire with a carcass layer including a plurality of carcass cords extending in a tire radial direction, laid between a pair of beads and, the carcass layer is folded from the inside to the outside of the tire around a bead core which is disposed at each bead, and a bead filler composed of a rubber composition is arranged on the bead core.

SUMMARY OF THE INVENTION

PROBLEMS TO BE SOLVED BY THE INVENTION

However, the pneumatic radial tire described in Patent Document 1 had a deteriorated ride comfort compared to Comparative Examples that did not have a reinforcing layer, and therefore actually failed to achieve both ride comfort and steering stability. Since the pneumatic radial tire described in Patent Document 2 does not have a circumferential weft to keep carcass cords even, and thus the carcass rigidity is reduced, cords in a bead reinforcing layer are arranged to compensate for this reduced carcass rigidity. Therefore, the cords of the bead reinforcing layer are used in a state in which tensile stress is always applied to the cords to produce carcass rigidity. This increased the vertical spring coefficient of the tire and deteriorated the ride comfort under straight running.

Pneumatic radial tires have been required to be lighter in order to reduce the unsprung weight of automobiles, and attempts have been made to reduce the size of bead fillers for this purpose. However, since a bead filler increases the vertical spring coefficient of a tire by reducing the lateral displacement of the tire, reducing the size of the bead filler may lead to a decrease in the lateral spring coefficient and a decrease in the vertical spring coefficient of the tire. Therefore, considering the reinforcement of the lateral spring coefficient and the vertical spring coefficient of a tire by providing a bead reinforcing layer in the tire circumferential direction, the cords of the bead reinforcing layer are used always under tensile stress for reinforcement. There is a concern that this may increase the vertical spring coefficient of the tire too much and deteriorate the ride comfort during straight running.

Accordingly, an object of the present invention is to provide a pneumatic tire including a bead filler with a reduced size that achieves both ride comfort and steering stability at a high level.

MEANS FOR SOLVING THE PROBLEMS

The pneumatic tire of the present invention is a pneumatic tire according to independent claim 1.

In such pneumatic tires, the bead filler height is less than or equal to the value obtained by a predetermined formula, allowing the weight of the tire to be reduced. Reinforcement using a cord with low elastic modulus in a low-strain region at or below an inflection point and high elastic modulus in a high-strain region above the inflection point suppresses increase in rigidity in a low elastic modulus region for vertical rigidity, which is related to the ride comfort, while high rigidity is obtained in a high elastic modulus region for lateral rigidity, which is related to the steering stability, thus achieving both ride comfort and steering stability at a high level.

In the pneumatic tire of the present invention, the cord may be configured to be composed of two or more kinds of fibers of different materials, wherein the fibers are composed of organic fibers or inorganic fibers.

The cord may be arranged between a main body portion ply of the carcass and the bead filler, may be arranged between the bead filler and a folding-over portion ply of the carcass, or may be arranged outside a folding-over portion ply of the carcass in the tire radial direction.

Furthermore, the material of the cord preferably contains at least aramid or polyethylene terephthalate.

Still furthermore, the cord preferably has the inflection point in the range of 1 to 8% tensile strain, and the elastic modulus in the low-strain region is in the range of 10 to 90% of the elastic modulus in the high-strain region.

The method of manufacturing pneumatic tires of the present invention is a method of manufacturing the pneumatic tire, wherein

one or more kinds of non-linear elastic modulus cords having a non-linear elastic modulus are prepared, the elastic modulus of the respective non-linear elastic modulus cord is controlled in a tire molding process by applying different tensions to the non-linear elastic modulus cords depending on the position of the cords in the tire, and non-linear elastic modulus cords of more kinds than the prepared non-linear elastic modulus cords are formed in the tire.

EFFECTS OF THE INVENTION

According to the present invention, both ride comfort and steering stability can be achieved at a high level.

BRIEF DESCRIPTION OF THE DRAWINGS

FIG. 1 is a cross-sectional view in the width direction of a pneumatic tire of an embodiment of the present invention.
FIG. 2 is an enlarged cross-sectional view of a rim in the vicinity of the flange.
FIG. 3 is a cross-sectional view of a tire in the width direction illustrating relations for the height of a bead filler.
FIG. 4 is a cross-sectional view in the width direction of a pneumatic tire illustrating a deformed state of the tire during straight running.
FIG. 5 is cross-sectional view of a pneumatic tire in the width direction illustrating a deformed state of the tire during cornering.
FIG. 6 is a graph illustrating a stress-strain curve of a non-linear elastic modulus cord.
FIG. 7A is a cross-sectional view in the width direction of a pneumatic tire illustrating an arrangement of non-linear elastic modulus cords, and an example of the arrangement in which the cords are arranged between a main body portion ply of a carcass and a bead filler.
FIG. 7B is a cross-sectional view in the width direction of a pneumatic tire illustrating an arrangement of non-linear elastic modulus cords, and is an example of the arrangement in which the cords are arranged between a bead filler and a folding-over portion ply of a carcass.
FIG. 7C is a cross-sectional view in the width direction of a pneumatic tire illustrating an arrangement of non-linear elastic modulus cords, and an example of the arrangement in which the cords are arranged outside a folding-over portion ply of a carcass in the tire radial direction.

MODE FOR CARRYING OUT THE INVENTION

Embodiments of the pneumatic tire of the present invention (hereinafter, also simply referred to as "tire") will be described in more detail using the drawings.

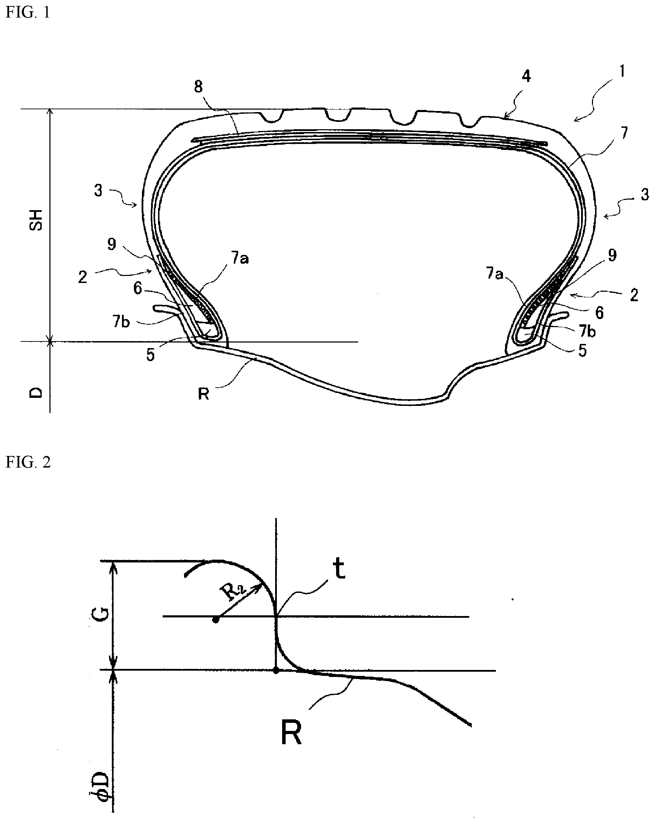

FIG. 1 illustrates a cross-sectional view in the width direction of a pneumatic tire 1 of one embodiment of the present invention in a state of being mounted on a wheel rim R. In FIG. 1, a pneumatic tire 1 includes: a pair of bead portions 2; a pair of sidewall portions 3 connected to each of the bead portions 2; and a tread portion 4 connecting the outer circumferential edges of the pair of sidewall portions 3. The bead portion 2 includes a bead core 5 composed of wound bead wires. A bead filler 6 made of hard rubber is arranged adjacent to this bead core. The pair of bead portions 2 are provided in the width direction of the pneumatic tire 1. One end of a carcass 7 is arranged to be folded over the bead core 5 and the bead filler 6 of one of the bead portions 2, and the other end of the carcass 7 is arranged to be folded over the bead core 5 and the bead filler 6 of the other bead portion 2.

The carcass 7 has a toroidal shape extending from the pair of sidewall portions 3 connected to the pair of bead portions 2 to the tread portion 4. The carcass 7 is composed of a carcass ply obtained by coating a carcass cord with rubber, and serves as a framework to maintain the shape of the pneumatic tire 1. In radial tires, the carcass cord of the carcass 7 extends in the tire radial direction.

A belt 8 composed of one or more belt plies is arranged on the outer circumferential side of the crown portion of the carcass 7.

The pneumatic tire of the present invention defines the bead filler height $H_{bf}$ as an indicator of the size of the bead filler 6. In a state of being mounted on a rim, defining the rim diameter as D, the length from the rim outer circumference representing the rim diameter D to the maximum tire radial height as SH, the rim flange height as G, the rim flange radius as $R_2$, and the bead filler height $H_{bf}$ as the tire radial height with respect to the rim outer circumference representing the rim diameter D,

the bead filler height $H_{bf}$ is less than or equal to a value obtained by the following formula:

$$\{SH - (G - R_2)\}/4 + (G - R_2).$$

The size of the bead filler 6 will be described in more detail.

In order to reduce the weight of a tire, it is generally considered that a bead core and a bead filler are to be made smaller. Here, the bead core is a collective body composed of a plurality of bead wires. Assuming that the bead core is made smaller, the mating force with a wheel is reduced, which is undesirable because a tire may detach from the wheel due to a lateral impact input, as in the case of a collision with a curb. On the other hand, lowering the height of the bead filler can reduce the weight of a tire, and also reduce the vertical spring coefficient of the tire, which can improve the ride comfort performance. Meanwhile, since the lateral spring coefficient is reduced, the steering stability may be reduced. However, in the present invention, the lateral spring coefficient can be adjusted by the cords provided in the tire circumferential direction, as described below, and the height of the bead filler is lowered to reduce the weight of the tire.

In order to investigate a preferred size of the height of this bead filler, a deformed shape under load was observed in detail in the tire cross section. In a tire illustrated in FIG. 1, the bead portion of the tire 1 does not deform up to the height of the tangent line between the flange surface and the vertical plane when the plane in contact with the curved flange surface of the wheel R is a vertical plane, but deforms on the tire outer diameter side above this position. The height of the tangent line between the flange portion surface and the vertical plane is the height of the contact point t when the tangent line to the curved plane representing the flange portion of the rim is in the vertical direction in the enlarged cross-sectional view of the vicinity of the flange portion of the rim illustrated in FIG. 2.

The sidewall portion 3 of the tire 1 is convexly deformed outward from the tire in the tire width direction on the tire outer diameter side above the predetermined height, and convexly deformed inward from the tire in the tire width direction on the tire inner diameter side above the predetermined height.

As a result of analyzing a variety of tires, it was found that the vertical spring coefficient and the weight of a tire can be effectively reduced by arranging the bead filler 6 at a height less than the height at which the deformation in the sidewall section 3 of the tire 1 is convex toward the inside of the tire in the tire width direction; in other words, by making the height of the bead filler 6 less than the height of the boundary between the region where the deformation in the sidewall portion of the tire is convex toward the inside of the tire in the tire width direction and the region where the deformation is convex toward the outside of the tire in the tire width direction.

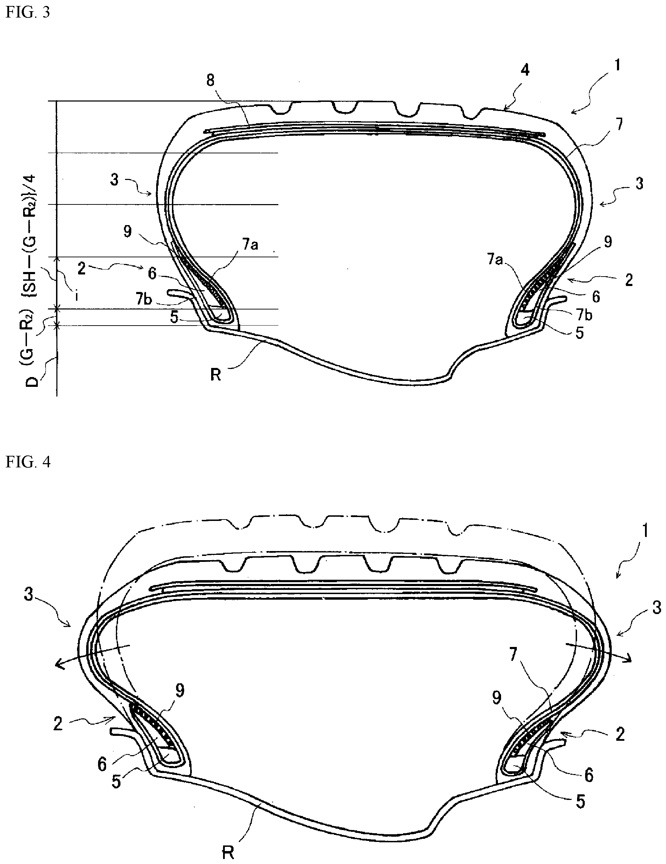

The predetermined height of the sidewall portion can be determined as follows, specifically using FIG. 3. When a tire is mounted on a JATMA standard rim and filled with internal pressure, and the length from the rim diameter D to the outer circumference of the tire is SH (see FIG. 1), the rim flange height is G (see FIG. 2), and the rim flange radius is $R_2$ (see FIG. 2), as illustrated in the cross-sectional view of the tire in FIG. 3, the height of the undeformed portion t in the bead portion of the tire is $(G-R_2)$ with respect to the position representing the rim diameter D. The height i of the region in the sidewall of the tire where the inside is convexly deformed is $\{SH-(G-R_2)\}/4 + (G-R_2)$ with respect to point D. This height i is illustrated in FIG. 3.

Therefore, a preferred bead filler height $H_{bf}$ is less than or equal to the height i. This bead filler height $H_{bf}$ is expressed by the following formula:

$$H_{bf} \leq \{SH - (G - R_2)\}/4 + (G - R_2).$$

However, by lowering the height of the bead filler compared to the conventional ones and reducing the thickness of the bead filler accordingly, both the vertical spring coefficient and the lateral spring coefficient of a tire are lowered, which improves the ride comfort, but may reduce the steering stability. The pneumatic tire 1 of the present invention can address this problem with cords 9, since the cords 9 are provided in at least one part from a bead portion 2 to a sidewall portion 3. The cords 9 will be described in detail below.

As illustrated in the cross-sectional view in FIG. 1, in the pneumatic tire 1 of the present invention, the cords 9 are provided in at least one part from the bead portion 2 to the sidewall portion 3. The cords 9 are at an angle of 0 to 10° with respect to the tire circumferential direction. The cords 9 have an inflection point in a stress-strain curve, and defining the region from the origin to the inflection point of a tensile strain-stress curve as a low-strain region and the region where the tensile strain is higher than the inflection point as a high-strain region, the cords 9 have a low elastic modulus in the low-strain region at or below the inflection point and a high elastic modulus in the high-strain region above the inflection point. Such a cord with a low elastic modulus in the low-strain region at or below the inflection point and a high elastic modulus in the high-strain region above the inflection point is herein referred to as a "non-linear elastic modulus cord.

In the present embodiment illustrated in FIG. 1, when the carcass 7 is divided into a main body portion 7a and a folding-over portion 7b, the cords 9 are arranged between the main body portion 7a and the bead filler 6.

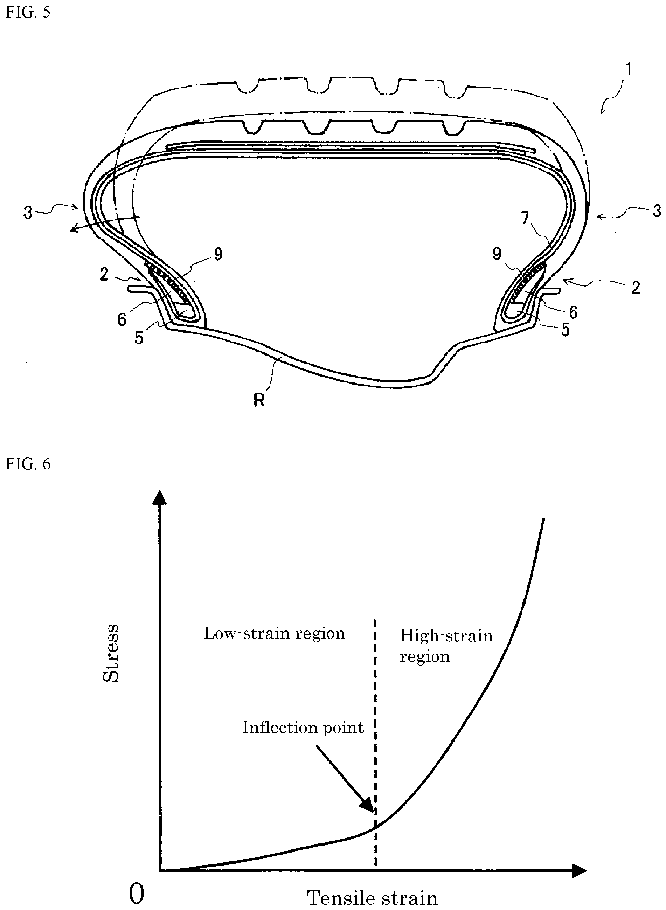

An operational advantage of the cords 9 will be described using FIG. 4 and FIG. 5.

A deformed state of the tire 1 when loaded, viewed in a vertical cross section including the tire rotation axis, is illustrated in FIG. 4 as a cross section in the tire width direction. The deformed state illustrated in FIG. 4 is the same as the deformed state when running in a straight line.

In FIG. 4, when a load is applied to the tire 1 during straight running, each of the pair of sidewall portions 3 bulges and deforms outward in the tire width direction. At this time, as seen in a cross-section in the tire width direction in FIG. 4, a portion of the bead portion 2 that is assembled to a rim of a wheel is almost fixed, while the remaining portion is subjected to bending deformation. Such a deformation is caused by a force in the radial direction of the tire.

A deformed state of the tire 1 when loaded during cornering, viewed in a vertical cross section including the tire rotation axis, is illustrated in FIG. 5 as a cross section in the tire width direction. A bead portion 2 on the inside of the cornering deforms outward as indicated by the arrow, while the bead portion 2 on the outside of the cornering deforms less than the deformation during straight running in FIG. 1. This deformation will be described in more detail. During cornering, a lateral force is applied to the ground surface of the tire 1 from the outside to the inside of the cornering. Therefore, compared to the deformation of the tire during straight running illustrated in FIG. 4, the tire is deformed in such a manner that the outward bulging is reduced in the outer sidewall of the cornering and the outward bulging is increased in the inner sidewall of the cornering. At this time, when viewed in a cross section in the tire width direction in FIG. 5, bending deformation decreases in the bead portion 2 of the pair of bead portions 2 that is located outside cornering, and bending deformation increases in the bead portion 2 of the pair of bead portions 2 that is located inside the cornering.

An effect of the non-linear elastic modulus cord 9, which is at an angle of 0 to 10° with respect to the circumferential direction, provided in the pneumatic tire of the present embodiment on the tire deformation during straight running illustrated in FIG. 4 and the tire deformation during cornering illustrated in FIG. 5, will be described in comparison with some comparative tires.

First, a case of a comparative tire with reinforcing cords in at least one part from a bead portion to a sidewall portion at an angle greater than 10° with respect to the circumferential direction will be described.

When, as in the comparative tire, a cord with a large angle to the circumferential direction is provided in a bead portion, the cord, which has more rigidity than rubber, is strained against a force of bending deformation of the bead portion in a cross section in the tire width direction. Therefore, the cords exhibit a rigidity that suppresses tire deformation, in particular bending deformation of the bead portion. Therefore, such a comparative tire has a larger vertical spring coefficient (spring constant in the tire radial direction), or in other words, the tire has a higher vertical rigidity, which worsens the ride comfort. When the cord suppresses bending deformation of a bead portion, not only is a vertical (tire radial) deformation suppressed, but a lateral (tire width) deformation is also suppressed. Therefore, the lateral spring coefficient (spring constant in the tire width direction) of the tire is increased, in other words, the lateral rigidity is increased and the steering stability is improved.

Next, a case of a comparative tire with reinforcing cords, which are cords with a small angle with respect to the circumferential direction (from 0 to 10° with respect to the circumferential direction) but are not non-linear elastic modulus cords, provided in at least one part from a bead portion to a sidewall portion will be described.

When a cord with a small angle with respect to the circumferential direction is provided in a bead portion, as in such a comparative tire, there is no effect of the cord on a force of bending deformation of the bead portion in a cross section in the tire width direction during straight running, since rubber between the cords, which has a low elastic modulus, stretches and deforms. In response to a force of bulging deformation in a sidewall portion, a strain is applied to the cord at an angle close to the circumferential direction, which has a high elastic modulus, and this cord is difficult to stretch, and the rigidity of the tire is thus increased. Therefore, the vertical spring coefficient of such a comparative tire is not affected by the cords in the bead portion, but is affected by the cords in the sidewall portion, and the coefficient becomes larger.

A case of this comparative tire during cornering will be described. When cords with a small angle with respect to the circumferential direction are provided in at least one part from the bead portion to the sidewall portion, a force of bending deformation of the bead portion in a cross section in the tire width direction has no effect since rubber between the cords, which has a low elastic modulus, stretches and deforms. Regarding a force of bulging deformation of the sidewall portions, the portion of the sidewall portion outside the cornering where the bulging deformation is reduced among the pair of sidewall portions, is not affected by the cords since no force is applied to the cords due to the reduced bulging deformation, although the cords with an angle close to the circumferential direction, which have a high elastic modulus, are provided. In a portion of the sidewall portion inside the cornering where bulging increases, a strain is applied to the cords at an angle close to the circumferential direction, which have a high elastic modulus, and since these cords are difficult to stretch, the tire rigidity can be increased. Accordingly, the inventors' research newly found that the lateral spring coefficient of the tire increases due to the influence of the cords inside the cornering, although not influenced by the cords of the bead portion and the cords outside the cornering.

The vertical spring coefficient of a tire during straight running influences ride comfort, while the lateral spring coefficient of a tire during cornering influences steering stability. Therefore, it was found that, in order to improve the ride comfort by reducing an increase in the vertical spring of the tire during straight running, and to improve the steering stability by further increasing the increase in the lateral spring coefficient during cornering, for cords with a small angle to the circumferential direction, which are provided in at least one part from a bead portion to a sidewall portion, the cord rigidity during small deformation during straight running needs to be low, and the cord rigidity during large deformation during cornering needs to be high. As a result of the inventors' research and development, they found that such cord characteristics can be achieved by using non-linear elastic modulus cords for cords provided in at least one part from a bead portion to a sidewall portion.

FIG. 6 is a graph illustrating one example of an elastic stress-strain curve of a non-linear elastic modulus cord. As illustrated in FIG. 6, the non-linear elastic modulus cord has a property that the elastic modulus, indicated by the slope of the curve in the figure, is a non-linear elastic modulus such that the elastic modulus is low in a low-strain region divided by the inflection point and high in a high-strain region.

Deformation states of a tire of the present embodiment, in which the non-linear elastic modulus cords illustrated in FIG. 6 are provided in at least one part from a bead portion to a sidewall portion at a low angle to the circumferential direction, during straight running and during cornering will be described. First, during straight running, the bead portion is subjected to bending deformation and the sidewall portion is subjected to bulging deformation, as described in FIG. 4, and in response to a force of the bulging deformation of the sidewall portion, a strain is applied to a non-linear elastic modulus cord. Since the non-linear elastic modulus cord is a cord in which the strain applied to the non-linear elastic modulus cord at this time is in a low-strain region, which is smaller than the inflection point of the curve illustrated in FIG. 6, a force is applied to the cord in a region where the elastic modulus is low. As a result, the vertical spring coefficient of the tire does not increase during straight running since the tire rigidity does not increase even when the non-linear elastic modulus cord is provided. Therefore, the ride comfort during straight running does not deteriorate.

Next, during cornering, although the bead portion is subjected to bending deformation and the sidewall portion is subjected to bulging deformation, as described using FIG. 5, a strain applied to the non-linear elastic modulus cord becomes small since deformation is smaller in the sidewall portion outside the cornering than when going straight. In the sidewall portion inside the cornering, since the non-linear elastic modulus cord is a cord in which a strain applied to the cord is in a high-strain region, which is larger than the inflection point of the curve illustrated in FIG. 6, a force is applied to the cord in a region where the elastic modulus is high. As a result, in the case of cornering, the rigidity of a tire can be increased by providing non-linear elastic modulus cords, and the lateral spring coefficient of the tire can be increased, which can improve the ground contact condition during cornering. For example, by suppressing ground surface lifting that occurs on the inner side of cornering, the ground contact area can be increased and a decrease in ground pressure on the inner side of cornering can be suppressed. Therefore, the steering stability during cornering can be improved.

The changes in the deformation state of the tire during straight running and during cornering allow the pneumatic tire of the present embodiment to achieve both ride comfort and steering stability at a high level.

As described above, in the pneumatic tire of the present embodiment, the height of the bead filler is less than or equal to a value determined by a predetermined formula. This reduces both the vertical spring coefficient and the lateral spring coefficient of the tire because the bead filler is smaller and thinner than conventional ones. This improves the ride comfort during straight running, but may reduce the steering stability during cornering. In this regard, cords provided in at least one part from a bead portion to a sidewall portion in the tire circumferential direction can compensate for reduced size of the bead filler and improve the vertical spring coefficient and the lateral spring coefficient of the tire.

However, when the cord is not a non-linear elastic modulus cord, the cord is used always with tensile stress applied to reinforce a bead filler, and although the cord has sufficient steering stability during cornering, the vertical spring coefficient may be too high, worsening the ride comfort during straight running, or the ride comfort during straight running may be favorable, but sufficient steering stability during cornering may deteriorate. In contrast, since the cord 9 is a non-linear elastic modulus cord, the pneumatic tire of the present embodiment has a low elastic modulus property in a low-strain region, which allows the tire to have sufficient steering stability during cornering while lowering the vertical spring coefficient for favorable ride comfort during straight running. Therefore, while reducing the weight of a tire by reducing the size of a bead filler, excellent steering stability during cornering and favorable ride comfort during straight running can be obtained. By adjusting the properties of the non-linear elastic modulus of the cord, weight reduction of the tire, excellent steering stability during cornering, or favorable ride comfort during straight running can be adjusted.

Next, the non-linear elastic modulus cord of a pneumatic tire of the present embodiment will be described in more detail.

The elastic modulus of a non-linear elastic modulus cord is measured by cutting the cord out of the tire. In other words, the non-linear modulus cord is a cord that, when incorporated into an actual tire, exhibits a low elastic modulus or a high elastic modulus depending on the deformation during straight running or during cornering.

A specific method of measuring the elastic modulus is as described below. A test is conducted in the same way as the test for "Tensile Strength and Elongation" in accordance with JIS L1017, and the tensile strength and elongation are measured. From these measurement results, a curve is drawn in a graph with the tensile strain, which is the ratio of the initial length to the elongation length, and the stress on the vertical axis. In the curve of the graph with the stress on the Y-axis and the strain on the X-axis, the point where the perpendicular line passing through the intersection of the tangent line drawn on the curve when the strain is zero and the tangent line drawn on the curve at the breaking point intersects the curve is the inflection point.

This inflection point is preferably in the range of 1 to 8% tensile strain. The elastic modulus in the low-strain region is preferably in the range of 10 to 90% of the elastic modulus in the high-strain region.

It is more preferable for a cord to have a non-linearity such that the elastic modulus in the high-strain region is more than twice as large as the elastic modulus in the low-strain region. The ratio of the elastic modulus in the low-strain region to the elastic modulus in the high-strain region is represented by the ratio of the slope of the straight line connecting the strain zero to the inflection point to the slope of the straight line connecting the inflection point to the breaking point.

It is conceivable that, for the cords forming a small angle with respect to the circumferential direction, the non-linear elastic modulus cord provided in the pneumatic tire of the present embodiment is not used, and that, for example, a cord with a low rigidity is provided on the inner side in the tire radial direction, and a cord with a high rigidity is provided on the outer side in the tire radial direction. However, tires using a plurality of kinds of cords have durability issues, such as strain concentration in the rubber where the rigidity changes in the tire radial direction, or where different kinds of cords are switched, resulting in cracks during use. In contrast, in this pneumatic tire of the present embodiment, by using a cord with a non-linear elastic modulus property, the rigidity in the tire radial direction due to the non-linear modulus cord changes gradually. Therefore, strain concentration in the rubber can be avoided, and the durability can be improved.

A non-linear elastic modulus cord may be composed of two or more kinds of fibers of different materials, and the fibers may be composed of organic fibers or inorganic fibers.

In order to realize a non-linear elastic modulus cord, two or more kinds of materials with different elastic moduli, in one example, a cord with a low elastic modulus and a cord with a high elastic modulus, are used. A non-linear modulus cord formed by twisting two cords of different moduli together can exhibit low elastic modulus cord characteristics at low strain and high elastic modulus cord characteristics at high strain. As a result, a non-linear elastic modulus property can be obtained. The non-linear elastic modulus properties can be adjusted by selecting the material.

Organic fibers or inorganic fibers used for tires can be used as the material for non-linear elastic modulus cords. Examples of the organic fibers include nylon, polyethylene terephthalate, polyethylene naphthalate, and aramid. Examples of the inorganic fibers include glass fiber, carbon fiber, and steel. From these materials, materials with different elastic moduli are combined. For example, nylon, which has the lowest elastic modulus among these materials, can be selected as the material with a low elastic modulus, any of the above-described materials other than nylon can be selected as the material with a high elastic modulus, and these materials can be combined. Polyethylene terephthalate can be selected as the material with a low elastic modulus, any of polyethylene naphthalate, aramid, glass fiber, carbon fiber, or steel can be selected as the material with a high elastic modulus, and the selected materials can be combined. In addition, polyethylene naphthalate can be selected as the low elastic modulus material, any of aramid, glass fiber, carbon fiber, or steel can be selected as the material with a high elastic modulus, and the selected materials can be combined.

By using aramid as at least one of the materials for the non-linear elastic modulus cord, external damage that may occur when a foreign object hits the cord during running can be controlled by taking advantage of a favorable cut resistance that aramid has. By using polyethylene terephthalate as at least one of the materials for the non-linear modulus cord, the elastic modulus can be increased at a low cost.

Materials applied to a non-linear elastic modulus cord and materials applied to a carcass may be different. When the materials for a non-linear elastic modulus cord is the same as the materials for a main body portion ply, strain concentration occurs in the rubber sandwiched in between at the intersection of the main body portion ply and the non-linear elastic modulus cord. In contrast, by using cords with different moduli, a low elastic modulus cord is pushed by a high elastic modulus cord, and the strain can be distributed between the cords.

The angle of the non-linear elastic modulus cord with respect to the tire circumferential direction is in the range of 0 to 10°. When the absolute value of the angle with respect to the tire circumferential direction exceeds 10°, the vertical spring coefficient during straight running becomes high, and the ride comfort deteriorates.

Arrangement of the non-linear elastic modulus cord is not particularly limited, and the cord can be arranged in at least one part from the bead portion to the sidewall portion, where deformation can occur. By arranging a non-linear elastic modulus cord with an appropriate elastic modulus in an appropriate position according to the deformation state of the tire during straight running and cornering, both ride comfort and steering stability can be achieved at a high level.

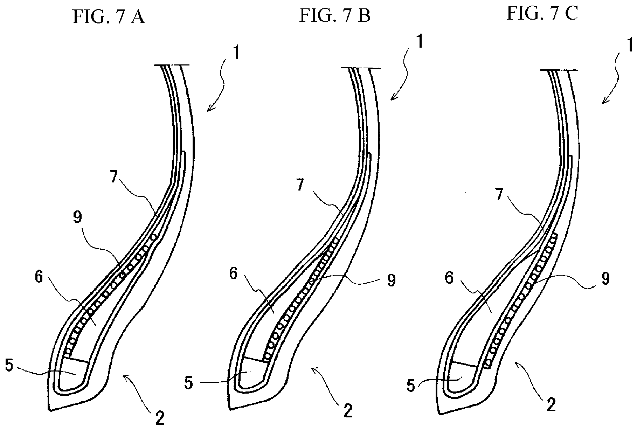

When arranged at least in a region including a bead portion, the non-linear elastic modulus cord 9 can be arranged between the main body portion ply of the carcass and the bead filler as illustrated in FIG. 7A, between the bead filler and the folding-over portion ply of the carcass as illustrated in FIG. 7B, or outside the folding-over portion ply of the carcass in the tire radial direction as illustrated in FIG. 7C.

By arranging the non-linear elastic modulus cord between the main body ply of the carcass and the bead filler as illustrated in FIG. 7A, the non-linear elastic modulus cord is arranged adjacent to the main body portion ply of the carcass, which effectively suppresses deformation of the main body portion ply that bears the internal pressure, thus effectively increasing the lateral spring coefficient of the tire. The main body portion ply generates tension when subjected to internal pressure and exhibits rigidity. Therefore, tire deformation is mainly borne by the main body portion ply, and arranging the non-linear elastic modulus cord on the adjacent outer side is effective in suppressing outward deformation of this portion.

By arranging the non-linear elastic modulus cord between the bead filler and the folding-over portion ply of the carcass, as illustrated in FIG. 7B, the bead filler receives the rigidity exhibited by the non-linear elastic modulus cord, and the lateral spring coefficient can be further increased. When the non-linear elastic modulus cord is arranged outside a bead filler to suppress deformation of the main body portion ply of the carcass, deformation of not only the main body portion ply but also the bead filler can be suppressed, and thus outward deformation of this portion can be further suppressed.

By arranging the non-linear elastic modulus cord outside the folding-over portion ply of the carcass in the tire radial direction as illustrated in FIG. 7C, the rigidity exhibited by the non-linear elastic modulus cord is received by the bead filler sandwiched between the main body portion ply and the folding-over portion ply as a whole, which greatly increases the lateral spring coefficient. The main body portion ply, the bead filler, and the folding-over portion ply work together to suppress deformation of the bead portion. When the non-linear elastic modulus cord is arranged on the outside of the folding-over portion ply, deformation of these three integrated portions can be suppressed, and therefore outward deformation of this portion can be further greatly suppressed.

A non-linear elastic modulus cord that has an appropriate elastic modulus in the tire may be prepared. The non-linear elastic modulus properties of the non-linear elastic modulus cord may be utilized to control the elastic modulus of the product by deformation during the tire manufacturing process. When tensile deformation is applied to the non-linear elastic modulus cord in the direction of the cord during the tire manufacturing process, the cord can be easily deformed by utilizing properties of low strain and low elasticity, and controlled and appropriate non-linear elastic modulus properties can be obtained inside the product tire.

The non-linear elastic modulus cord may have different non-linear elastic modulus properties within the tire, depending on where the cord is arranged in the tire. By arranging a non-linear elastic modulus cord with appropriate non-linear elastic modulus properties according to the deformation that varies depending on position in the tire, the ride comfort and the steering stability can be improved in a high balance.

A plurality of kinds of non-linear elastic modulus cords with different non-linear elastic modulus properties depending on position in the tire may be prepared before the tire molding process, however, by preparing one or more kinds of non-linear elastic modulus cords and applying different tensions to the non-linear elastic modulus cords depending on the position in the tire in the tire molding process during tire manufacturing, the elastic modulus of the non-linear elastic modulus cords can be controlled depending on the position in the product tire to obtain more kinds of non-linear elastic modulus cords in the tire than the prepared non-linear elastic modulus cords. By changing the tension of the non-linear elastic modulus cord according to the position in the tire during the manufacturing process, the elastic modulus of the cord can be changed, and therefore the elastic modulus can be changed according to the position in the tire while using the same material. Therefore, the number of kinds of materials for the non-linear elastic modulus cord to be prepared can be reduced, and the cord can be produced efficiently.

By controlling the tension applied during tire manufacturing in this way, tires with a variety of properties can be obtained. For example, in the tire molding process, the non-linear elastic modulus cord in the sidewall portion is greatly stretched in the circumferential direction because a member wound on a drum is expanded into a raw tire. Therefore, in the sidewall portion, the high-strain region of the non-linear elastic modulus cord is used, resulting in a higher rigidity than the non-linear elastic modulus cord in the bead portion. By so doing, the rigidity of the tire during cornering can be increased more effectively.

For example, the elastic modulus can be changed by the tension during manufacturing, and the non-linear elastic modulus cord in the bead portion can have a higher elastic modulus than the sidewall portion. As a result, the rigidity of the tire during cornering can be increased slightly.

For example, by expansion and tension in the tire molding process, the non-linear elastic modulus cord extending from the bead portion to the sidewall portion can also have a high elastic modulus in the center portion in the tire radial direction. As a result, the rigidity of the tire during cornering can be moderately increased.

EXAMPLES

Data for testing using the following test method is shown in Table 1.

Passenger car tires with a tire size of 155/65R14 75S are manufactured by arranging a variety of cords of Conventional Example, Comparative Examples, and Examples shown below in a bead portion. In Conventional Example, cords were not arranged. The main body portion ply cord is made of polyethylene terephthalate. Rim assembly is performed with an internal pressure of 210 kPa, a load of 5.73 kN, and a rim of 6J × 16. After internal pressure filling, a load of up to 6 kN is applied, the relationship between load and deflection is plotted, and the slope at a load of 5.73 kN is used as the vertical spring coefficient. With a load of 5.73 kN applied, a tire is displaced up to 10 mm in the lateral direction, the relationship between the amount of displacement and the lateral force is plotted, and the slope when the lateral displacement is 5 mm is used as the lateral spring coefficient. The estimated values of the vertical spring coefficient and the lateral spring coefficient are shown in Table 1. In Table 1, both of the spring coefficients are expressed with Conventional Example as 100.

Conventional Example: Without circumferential cord arrangement.

Comparative Example 1: With aramid cords arranged at a circumferential angle of 45 degrees.

Comparative Example 2: Without circumferential cord arrangement. The height of the bead filler is lower than conventional ones.

Comparative Example 3: With aramid cords of non-linear elastic modulus arranged at a circumferential angle of 50 degrees.

Example 1: With a non-linear elastic modulus cord made of nylon and aramid twisted together at a circumferential angle of virtually zero degrees, arranged on the inside of a main body portion ply. The inflection point is at 2% of the tensile strain, and the elastic modulus in the low-strain region is 20% of the high-strain region elastic modulus.

Example 2: With a non-linear elastic modulus cord made of nylon and aramid twisted together at a circumferential angle of virtually zero degrees, arranged between the bead filler and a folding-over portion ply. The inflection point is at 2% of the tensile strain, and the elastic modulus in the low-strain region is 20% of the elastic modulus in the high-strain region.

Example 3: With a non-linear elastic modulus cord made of nylon and aramid twisted together at a circumferential angle of virtually zero degrees, arranged on the outside of a folding-over portion ply. The inflection point is at 2% of the tensile strain, and the elastic modulus in the low-strain region is 20% of the high-strain region elastic modulus.

Example 4: With a non-linear elastic modulus cord made of nylon and polyethylene terephthalate twisted together at a circumferential angle of virtually zero degrees, arranged on the outside of a folding-over portion ply. The inflection point is at 2% of the tensile strain, and the elastic modulus in the low-strain region is 50% of the elastic modulus in the high-strain region.

[Table 1]

| | Bead filler height | Calculation result *1 | Vertical spring coefficient | Lateral spring coefficient |
|---|---|---|---|---|
| Conventional Example | 35 | 30.25 | 100 | 100 |
| Comparative Example 1 | 35 | 30.25 | 110 | 110 |
| Comparative Example 2 | 20 | 30.25 | 90 | 90 |
| Comparative Example 3 | 35 | 30.25 | 105 | 108 |
| Example 1 | 20 | 30.25 | 90 | 95 |

(continued)

| | Bead filler height | Calculation result *1 | Vertical spring coefficient | Lateral spring coefficient |
|---|---|---|---|---|
| Example 2 | 20 | 30.25 | 90 | 98 |
| Example 3 | 20 | 30.25 | 90 | 102 |
| Example 4 | 20 | 30.25 | 90 | 95 |
| *1 Calculation formula: {SH - (G - R₂)}/4 + (G - R₂) | | | | |

*1 Calculation formula: $\{SH - (G - R_2)\}/4 + (G - R_2)$

As shown in Table 1, Examples 1 to 4 provide favorable ride comfort with no increase in the vertical spring coefficient compared to Conventional Example, and provide favorable steering stability with an increase in the lateral spring coefficient compared to Conventional Example. In contrast, Comparative Examples 1 and 3 provide deteriorated ride comfort with an increase in the vertical spring coefficient compared to Conventional Example.

The pneumatic tire of the present invention has been described above by way of embodiments and Examples, but the pneumatic tire of the present invention can be modified in many ways without departing from the gist of the present invention.

DESCRIPTION OF SYMBOLS

1 Pneumatic tire, 2 Bead portion, 3 Sidewall portion, 4 Tread portion, 5 Bead core, 6 Bead filler, 7 Carcass, 8 Belt, 9 Cord

**Claims**

1.   A pneumatic tire (1) comprising:

   a pair of bead portions (2) each containing a bead core (5), a pair of sidewall portions (3) each connected to each of the pair of bead portions and extending outward in a radial direction, and a tread portion (4) connecting the outer circumferential edges of the pair of sidewall portions; as well as
   a carcass (7) arranged in such a manner that both ends thereof are each folded over the bead core in the pair of bead portions to form a toroidal shape from the sidewall portions to the tread portion; a belt (8) provided on the outer circumferential side of a crown portion of the carcass; a bead filler (6) provided between a main body portion and a folding-over portion of the carcass; and
   a cord (9) provided in at least one part from the bead portion to the sidewall portions at an angle of 0 to 10° with respect to the circumferential direction, wherein,
   in a state of being mounted on a rim, defining the rim diameter as D, the length from the rim position representing the rim diameter D to the maximum tire radial height as SH, the rim flange height as G, the rim flange radius as $R_2$, and the bead filler height $H_{bf}$ as the tire radial height with respect to the rim position representing the rim diameter D,
   the bead filler height $H_{bf}$ is less than or equal to a value obtained by the following formula:

   $$\{SH - (G - R_2)\}/4 + (G - R_2),$$

   and
   the cord has an inflection point in a stress-strain curve, with a low elastic modulus in a low-strain region at or below the inflection point, and a high elastic modulus in a high-strain region above the inflection point; **characterised in that**
   the cord is composed of two or more kinds of fibers of different materials wherein the material of the cord contains at least polyethylene terephthalate;
   wherein the material applied to the cord is different to a material applied to the carcass.

2.   The pneumatic tire according to claim 1, wherein the fibers of the cord are composed of organic fibers or inorganic fibers.

3. The pneumatic tire according to claim 1 or 2, wherein the cord is arranged between a main body portion ply of the carcass and the bead filler.

4. The pneumatic tire according to claim 1 or 2, wherein the cord is arranged between the bead filler and a folding-over portion ply of the carcass.

5. The pneumatic tire according to claim 1 or 2, wherein the cord is arranged outside the folding-over portion ply of the carcass in the tire radial direction.

6. The pneumatic tire according to any one of claims 1 to 5, wherein the cord has the inflection point in the range of 1 to 8% tensile strain.

7. The pneumatic tire according to any one of claims 1 to 6, wherein the cord has the elastic modulus in the low-strain region in the range of 10 to 90% of the elastic modulus in the high-strain region.

8. A method of manufacturing the pneumatic tire according to any one of claims 1 to 7, wherein
one or more kinds of non-linear elastic modulus cords having a non-linear elastic modulus are prepared, the elastic modulus of the respective non-linear elastic modulus cord is controlled in a tire molding process by applying different tensions to the non-linear elastic modulus cords depending on the position of the cords in the tire, and non-linear elastic modulus cords of more kinds than the prepared non-linear elastic modulus cords are formed in the tire.

**Patentansprüche**

1. Luftreifen (1), Folgendes umfassend:

ein Paar von Wulstabschnitten (2), die jeweils einen Wulstkern (5) enthalten, ein Paar von Seitenwandabschnitten (3), die jeweils mit jedem des Paars von Wulstabschnitten verbunden sind und sich in einer radialen Richtung nach außen erstrecken, und einen Laufflächenabschnitt (4), der die äußeren Umfangskanten des Paares von Seitenwandabschnitten verbindet; sowie
eine Karkasse (7), die so angeordnet ist, dass beide Enden davon jeweils über den Wulstkern in dem Paar von Wulstabschnitten gefaltet sind, um eine toroidale Form von den Seitenwandabschnitten zu dem Laufflächenabschnitt zu bilden; einen Gürtel (8), der an der äußeren Umfangsseite eines Scheitelabschnitts der Karkasse bereitgestellt ist; einen Wulstfüller (6), der zwischen einem Hauptkörperabschnitt und einem umfaltbaren Abschnitt der Karkasse bereitgestellt ist; und
einen Kord (9), der in mindestens einem Teil von dem Wulstabschnitt zu den Seitenwandabschnitten in einem Winkel von 0 bis 10° in Bezug auf die Umfangsrichtung bereitgestellt ist, wobei,
in einem Zustand, in dem er auf einer Felge montiert ist, wobei der Felgendurchmesser als D, die Länge von der Felgenposition, die den Felgendurchmesser D darstellt, bis zur maximalen Reifenradialhöhe als SH, die Felgenhornhöhe als G, der Felgenhornradius als $R_2$, und die Wulstfüllerhöhe $H_{bf}$ als die Reifenradialhöhe in Bezug auf die Felgenposition, die den Felgendurchmesser D darstellt, definiert sind,
die Wulstfüllerhöhe $H_{bf}$ kleiner oder gleich einem Wert ist, der sich aus der folgenden Formel ergibt:

$$\{SH - (G - R_2)\} / 4 + (G - R_2),$$

und
der Kord einen Wendepunkt in einer Spannungs-Dehnungs-Kurve aufweist, mit einem niedrigen Elastizitätsmodul in einem Bereich mit geringer Dehnung am oder unterhalb des Wendepunkts, und einem hohen Elastizitätsmodul in einem Bereich mit hoher Dehnung oberhalb des Wendepunkts; **dadurch gekennzeichnet, dass**
der Kord aus zwei oder mehr Arten von Fasern aus unterschiedlichen Materialien zusammengesetzt ist, wobei das Material des Kords mindestens Polyethylenterephthalat enthält;
wobei sich das auf den Kord aufgebrachte Material von einem auf die Karkasse aufgebrachten Material unterscheidet.

2. Luftreifen nach Anspruch 1, wobei die Fasern des Kords aus organischen Fasern oder anorganischen Fasern zusammengesetzt sind.

3.	Luftreifen nach Anspruch 1 oder 2, wobei der Kord zwischen einer Hauptkörperabschnitts-Lage der Karkasse und dem Wulstfüller angeordnet ist.

4.	Luftreifen nach Anspruch 1 oder 2, wobei der Kord zwischen dem Wulstfüller und einer umfaltbaren Abschnittslage der Karkasse angeordnet ist.

5.	Luftreifen nach Anspruch 1 oder 2, wobei der Kord in der Reifenradialrichtung außerhalb der umfaltbaren Abschnittslage der Karkasse angeordnet ist.

6.	Luftreifen nach einem der Ansprüche 1 bis 5, wobei der Kord einen Wendepunkt im Bereich von 1 bis 8 % Zugdehnung aufweist.

7.	Luftreifen nach einem der Ansprüche 1 bis 6, wobei der Kord einen Elastizitätsmodul im Bereich mit geringer Dehnung im Bereich von 10 bis 90 % des Elastizitätsmoduls im Bereich mit hoher Dehnung aufweist.

8.	Verfahren zum Herstellen des Luftreifens nach einem der Ansprüche 1 bis 7, wobei
eine oder mehrere Arten von nichtlinearen Elastizitätsmodul-Korden mit einem nichtlinearen Elastizitätsmodul hergestellt sind, der Elastizitätsmodul des jeweiligen nichtlinearen Elastizitätsmodul-Kords in einem Reifenformungsprozess gesteuert wird, indem unterschiedliche Spannungen auf die nichtlinearen Elastizitätsmodul-Korde in Abhängigkeit von der Position der Korde im Reifen angewendet werden, und in dem Reifen nichtlineare Elastizitätsmodul-Korde von mehr Arten als die vorbereiteten nichtlinearen Elastizitätsmodul-Korde gebildet sind.


## Revendications

1.	Pneu (1) comprenant :

	une paire de parties de talon (2) contenant chacune une tringle de talon (5), une paire de parois latérales (3) reliées chacune à chacune de la paire de parties de talon et s'étendant à l'extérieur dans une direction radiale, et une partie de bande de roulement (4) reliant les bords circonférentiels extérieurs de la paire de parties de paroi latérale ; et
	une carcasse (7) disposée de sorte que les deux extrémités de celle-ci sont repliées chacune sur la tringle de talon dans la paire de parties de talon pour former une forme toroïdale à partir des parties de paroi latérale jusqu'à la partie de bande de roulement ; une ceinture (8) fournie sur le côté circonférentiel extérieur d'une partie de sommet de la carcasse ; un bourrage sur tringle (6) fourni entre une partie de corps principal et une partie de repliement de la carcasse ; et
	un câblé (9) fourni dans au moins une partie de la partie de talon jusqu'aux parties de paroi latérale à un angle de 0 à 10° par rapport à la direction circonférentielle, dans lequel,
	dans un état monté sur une jante, définissant le diamètre de jante comme D, la longueur de la position de jante représentant le diamètre de jante D jusqu'à la hauteur radiale maximale du pneu comme SH, la hauteur de rebord de jante comme G, le rayon de rebord de jante comme $R_2$, et la hauteur de bourrage sur tringle $H_{bf}$ comme la hauteur radiale du pneu par rapport à la position dejante représentant le diamètre dejante D,
	la hauteur de bourrage sur tringle $H_{bf}$ est inférieure ou égale à une valeur obtenue par la formule suivante :

$$\{SH - (G - R_2)\} / 4 + (G - R_2),$$

	et
	le câblé présente un point d'inflexion dans une courbe contrainte / déformation, avec un faible module élastique dans une région de faible déformation au niveau ou en dessous du point d'inflexion, et un module élastique élevé dans une région de haute déformation au-dessus du point d'inflexion ; **caractérisé en ce que**
	le câblé est composé de deux sortes de fibres ou plus de différents matériaux dans lequel le matériau du câblé contient au moins du poly(téréphtalate d'éthylène) ;
	dans lequel le matériau appliqué au câblé est différent d'un matériau appliqué à la carcasse.

2.	Pneu selon la revendication 1, dans lequel les fibres du câblé sont composées de fibres organiques ou de fibres inorganiques.

3. Pneu selon la revendication 1 ou 2, dans lequel le câblé est disposé entre une nappe de partie de corps principal de la carcasse et le bourrage sur tringle.

4. Pneu selon la revendication 1 ou 2, dans lequel le câblé est disposé entre le bourrage sur tringle et une nappe de partie de repliement de la carcasse.

5. Pneu selon la revendication 1 ou 2, dans lequel le câblé est disposé à l'extérieur de la nappe de partie de repliement de la carcasse dans la direction radiale du pneu.

6. Pneu selon l'une quelconque des revendications 1 à 5, dans lequel le câblé présente un point d'inflexion compris dans la plage de 1 à 8 % d'allongement en traction.

7. Pneu selon l'une quelconque des revendications 1 à 6, dans lequel le câblé présente un module élastique dans la région de faible déformation compris dans la plage de 10 à 90 % du module élastique dans la région de haute déformation.

8. Procédé de fabrication d'un pneu selon l'une quelconque des revendications 1 à 7, dans lequel
une ou plusieurs sortes de câblés à module élastique non linéaire ayant un module élastique non linéaire sont préparées, le module élastique du câblé à module élastique non linéaire respectif est réglé dans un processus de moulage de pneu en appliquant différentes tensions aux câblés à module élastique non linéaire en fonction de la position des câblés dans le pneu, et des câblés à module élastique non linéaire de plus de sortes que les câblés à module élastique non linéaire préparés sont formés dans le pneu.

FIG. 1

FIG. 2

FIG. 3

FIG. 4

FIG. 5

FIG. 6

FIG. 7 A

FIG. 7 B

FIG. 7 C

**EP 3 895 883 B1**

## REFERENCES CITED IN THE DESCRIPTION

**Patent documents cited in the description**

- JP S6229403 A
- JP 2004058807 A
- JP 2013001206 A